# EUROPEAN PATENT SPECIFICATION

(11) **EP 2 447 329 B1**
(45) Date of publication and mention of the grant of the patent: **05.03.2014**
(21) Application number: 11186547.3
(22) Date of filing: 25.10.2011
(51) Int. Cl.: C09D 183/04, C08G 77/14

(54) **Radiation curable silicone composition**
Strahlenhärtbare Silikonzusammensetzung
Composition de silicone durcissable par radiation

(30) Priority: 28.10.2010 JP 2010242003
(43) Date of publication of application: 02.05.2012
(73) Proprietor: Shin-Etsu Chemical Co., Ltd., Chiyoda-ku Tokyo (JP)
(72) Inventor: Tanaka, Kenji, Annaka-shi, Gunma (JP); Irifune, Shinji, Annaka-shi,, Gunma (JP)
(74) Representative: Stoner, Gerard Patrick

(56) References cited:
- US-A- 4 279 717
- US-A1- 2003 232 900

## Description

### TECHNICAL FIELD

This invention relates to radiation curable silicone compositions.

### BACKGROUND

Various means are known for curing silicone compositions. A focus is recently placed on the radiation curing system as a curing system featuring good energy efficiency. Among others, a radiation curing system via cationic polymerization using a photoacid generator (PAG) for ring-opening of epoxy groups finds increasing use because this system can avoid cure inhibition by oxygen and offers convenience and effective operation, as compared with the prior art curing system via radical polymerization using acrylic or analogous groups (see JP 3384268 and JP 3993533).

Many compounds are proposed as the PAG for cationic polymerization. Often, zwitter-ions having an electric charge within the molecule are used (see JP 2557782). Generally, an epoxy group which is an organic group makes a great contribution to the solubility of a PAG. Then the PAG becomes more soluble as the degree of epoxy modification increases.

Meanwhile, cation polymerizable silicone compositions for use in the release paper application tend to have a low degree of modification with an epoxy group which is an organic group and a high proportion of siloxane in order to establish release properties from pressure-sensitive adhesives. Namely, where the cation polymerizable silicone compositions are used in release paper, the solubility of the PAG therein often becomes a problem.

As discussed above, the cation polymerizable silicone compositions for release paper should be increased in silicone content in order to ensure easy release from pressure-sensitive adhesives. Inversely, substrate adhesion is enhanced by increasing the amount of an epoxy group which is an organic group. Thus, when the silicone composition is adapted for light release from pressure-sensitive adhesives, an unwanted phenomenon that the cured coating peels off the substrate can occur.

### Citation List

Patent Document 1: JP 3384268
Patent Document 2: JP 3993533 (USP 6,875,795)
Patent Document 3: JP 2557782 (EP 0562897)

An object of the invention is to provide new radiation curable silicone compositions having good release properties from pressure-sensitive adhesives and tenacious adhesion to substrates.

The inventors have found that when an organopolysiloxane whose siloxane chain is terminated with an epoxy group is combined with a fluoroalkyl fluorophosphoric acid salt or diaryliodonium hexafluoroantimonate as the photoacid generator, there is obtained a radiation curable silicone composition which exhibits good release properties from pressure-sensitive adhesives and tenacious adhesion to release paper substrates.

The invention provides a radiation curable silicone composition comprising (A) 100 parts by weight of a cation polymerizable organopolysiloxane and (B) 0.05 to 20 parts by weight of a photoacid generator as major components.

Component (A) is a cation polymerizable organopolysiloxane having a siloxane chain terminated with an epoxy-containing organic group, represented by the general formula (1): 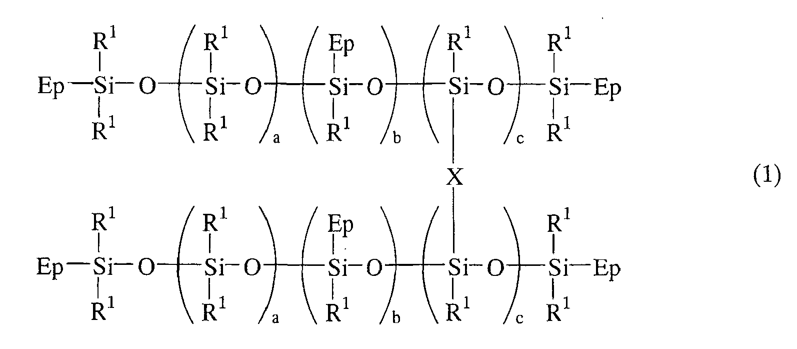 wherein R¹ is each independently a substituted or unsubstituted, monovalent hydrocarbon group of 1 to 10 carbon atoms, Ep is an epoxy-containing monovalent organic group, X is a substituent group of the general formula (2) or (3):

-Y-(Z)ₙ-Y- (2)

-O-(Z)ₙ- (3)

wherein Y is a divalent hydrocarbon group of 1 to 6 carbon atoms, Z is a dimethylsiloxy group, and n is an integer of at least 1, a, b, and c are numbers of at least 0, a+b+c is such a number that the organopolysiloxane may have a viscosity of 100 to 1,000 mPa-s at 25° C and the epoxy-containing monovalent organic group may account for 1 to 20 mol% of the entire organic groups. Preferably, in formula (1), a is a number of 10 to 150, b is a number of 1 to 15, and c is a number of 0 to 1.

In one aspect the PAG is (B) a fluoroalkyl fluorophosphoric acid salt having the general formula (4): 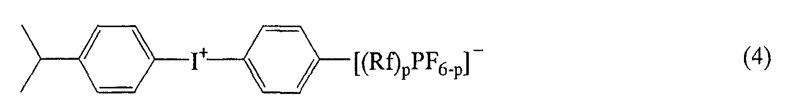 wherein Rf is each independently an alkyl group of 1 to 8 carbon atoms in which at least 80 mol% of hydrogen atoms are substituted by fluorine atoms, and p is an integer of 1 to 5. Or, the PAG is (B') a diaryliodonium hexafluoroantimonate.

The composition is typically used in release paper, which is an aspect of the invention.

### ADVANTAGEOUS EFFECTS

The silicone composition comprising an organopolysiloxane whose siloxane chain is terminated with an epoxy group and a fluoroalkyl fluorophosphoric acid salt or iodonium salt as PAG according to the invention effectively cures upon exposure to radiation, to form a cured silicone having utility in commercial applications. Particularly in the release paper application, the composition displays effective cure even under thin-film coating conditions, good release properties from pressure-sensitive adhesives and tenacious adhesion to substrates.

### FURTHER EXPLANATIONS; OPTIONS AND PREFERENCES

The radiation curable silicone composition comprises component (A) and component (B) or (B') as major components, which are described below in detail.

### Component A

Component (A) is a cation polymerizable organopolysiloxane represented by the general formula (1). 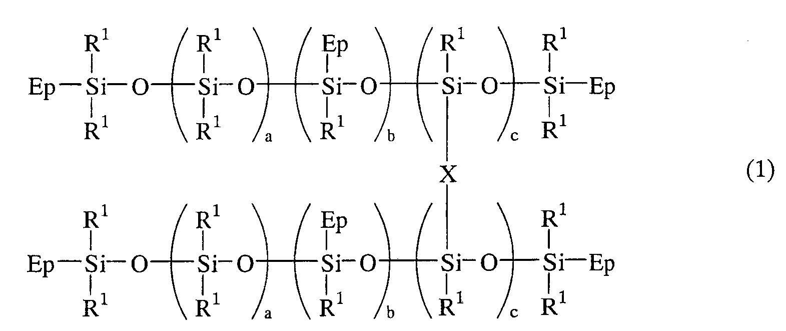 Herein R¹ is each independently a substituted or unsubstituted, monovalent hydrocarbon group of 1 to 10 carbon atoms, Ep is an epoxy-containing monovalent organic group, X is a substituent group of the general formula (2) or (3):

-Y-(Z)ₙ-Y- (2)

-O-(Z)ₙ- (3)

wherein Y is a divalent hydrocarbon group of 1 to 6 carbon atoms, Z is dimethylsiloxy, and n is an integer of at least 1, a, b, and c are numbers of at least 0, a+b+c is such a number that the organopolysiloxane may have a viscosity of 100 to 1,000 mPa-s at 25°C. The epoxy-containing monovalent organic group may account for 1 to 20 mol% of the entire organic groups.

In formula (1), R¹ is each independently selected from substituted or unsubstituted, monovalent hydrocarbon groups of 1 to 10 carbon atoms, for example, alkyl groups such as methyl, ethyl, propyl and butyl, cycloalkyl groups such as cyclohexyl, aryl groups such as phenyl and tolyl, and substituted forms of the foregoing in which some or all carbon-bonded hydrogen atoms are substituted by hydroxy, cyano, halogen or the like, such as hydroxypropyl, cyanoethyl, 1-chloropropyl, and 3,3,3-trifluoropropyl. It is preferred that at least 80 mol%, more preferably 90 to 100 mol% of R¹ be alkyl, with methyl being most preferred.

Ep is an epoxy-containing monovalent organic group or cation polymerizable epoxy functional organic group. Preferably Ep is selected from the following structures wherein the broken line denotes a valence bond.

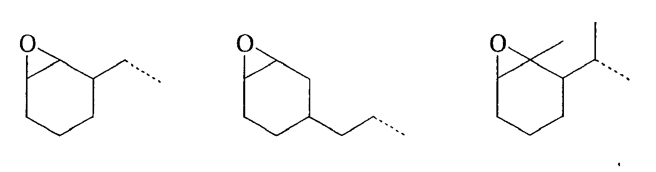

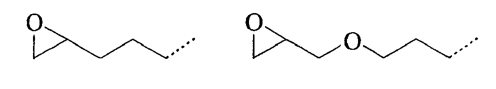

X is a substituent group of the general formula (2) or (3).

-Y-(Z)ₙ-Y- (2)

-O-(Z)ₙ- (3)

Herein Y is a divalent hydrocarbon group of 1 to 6 carbon atoms, such as methylene, ethylene, propylene or butylene. Preferably Y is methylene, ethylene, propylene or butylene, more preferably methylene, ethylene or propylene. O stands for oxygen, Z is dimethylsiloxy, and n is an integer of at least 1, preferably 1 to 500, and more preferably 1 to 300.

The organopolysiloxane having formula (1) may be prepared, for example, by the method of JP-A H10-182826 or JP-B H02-38602. When such a method is employed, the organopolysiloxane is obtained as a mixture of organopolysiloxanes of formula (1) wherein a, b, and c have varying values of at least 0. In this sense, a, b, and c represent average values. Preferably, a and b are more than 0. Preferably a is a number of 10 to 150. Preferably b is a number of 1 to 15. Preferably c is from 0 to 1, more preferably positive i.e. more than 0, up to 1. The sum of a+b+c is such a number that the organopolysiloxane may have a viscosity of 100 to 1,000 mPa-s at 25°C and the epoxy-containing monovalent organic group (or cation polymerizable epoxy functional group) may account for 1 to 20 mol% of the entire organic groups. More preferably the sum of a+b+c is such a positive number that the cation polymerizable epoxy functional group may account for 1 to 15 mol% of the entire organic groups. If the amount of epoxy functional group is less than 1 mol%, the cure rate is slow, leading to under-cure. If the amount of epoxy functional group exceeds 20 mol%, release properties from pressure-sensitive adhesives become poor.

The organopolysiloxane may have a viscosity of 100 to 1,000 mPa-s at 25°C. A viscosity of less than 100 mPa-s makes it difficult to apply the composition onto a substrate by roll coating or the like whereas a viscosity in excess of 1,000 mPa-s leads to a viscous composition which is awkward to handle. It is noted that the viscosity is measured at 25° C by a rotational viscometer.

The amount of the cation polymerizable organopolysiloxane (A) used is 100 parts by weight, on the basis of which the amounts of other components are determined.

Component (B) or (B') is a photoacid generator (PAG) which is a fluoroalkyl fluorophosphoric acid salt or diaryliodonium hexafluoroantimonate. In one embodiment, PAG (B) is a fluoroalkyl fluorophosphoric acid salt having the formula (4). 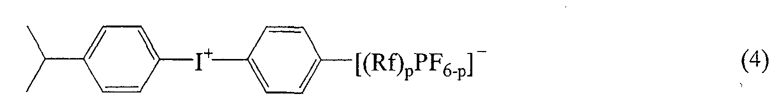 Herein Rf which may be the same or different is an alkyl group of 1 to 8 carbon atoms in which at least 80 mol% of hydrogen atoms are substituted by fluorine atoms, and p is an integer of 1 to 5.

The fluoroalkyl fluorophosphoric acid anion is represented by [(Rf)pPF₆₋ₚ]⁻ in formula (4). Rf is an alkyl group in which at least 80 mol% of hydrogen atoms are substituted by fluorine atoms, preferably having 1 to 8 carbon atoms, more preferably of 1 to 4 carbon atoms. Suitable alkyl groups include straight alkyl groups such as methyl, ethyl, propyl, butyl, pentyl and octyl, branched alkyl groups such as isopropyl, isobutyl, sec-butyl and tert-butyl, and cycloalkyl groups such as cyclopropyl, cyclobutyl, cyclopentyl and cyclohexyl. A percent substitution of hydrogen on alkyl by fluorine is typically at least 80 mol%, preferably at least 90 mol%, and most preferably 100 mol%. If the percent fluorine substitution is less than 80 mol%, the onium salt has a reduced ability to initiate cationic polymerization.

More preferably Rf is a straight or branched perfluoroalkyl group of 1 to 4 carbon atoms. As used herein, the term "perfluoro" means that the percent fluorine substitution is 100 mol%. Exemplary of the perfluoroalkyl group are CF₃, CF₃CF₂, (CF₃)₂ CF, CF₃CF₂CF2, CF₃CF₂CF₂CF₂, (CF₃)₂CFCF₂, CF₃CF₂(CF₃) CF, and (CF₃)₃C.

In formula (4), p indicative of the number of Rf is an integer of 1 to 5, preferably 2 to 4, and more preferably 2 or 3. A plurality of Rf groups may be the same or different.

Preferred examples of the fluoroalkyl fluorophosphoric acid anion include
CF3)₂PF₄]⁻, [(CF₃)PF₃]⁻,
[(CF₃CF₂)₂PF₄]⁻, [(CF₃CF₂)₃PF₃]⁻,
[((CF₃)₂CF)₂PF₄]⁻, [((CF₃)₂CF)₃PF₃]⁻,
[(CF₃CF₂CF₂)₂PF₄]⁻, [(CF₃CF₂CF₂)₃PF₃]⁻,
[((CF₃)₂CFCF₂)₂PF₄]⁻, [((CF₃)₂CFCF₂)₃PF₃]⁻,
[(CF₃CF₂CF₂CF₂)₂PF₄]⁻, [(CF₃CF₂CF₂CF₂)₃PF₃]⁻,
[(CF₃CF₂(CF₃)CF)₂PF₄]⁻, [(CF₃CF₂(CF₃)CF)₃PF₃]⁻,
[((CF₃)₃C)₂PF₄]⁻, and [((CF₃)₃C)₃PF]⁻.
Of these, preference is given to
[(CF₃CF₂)₃PF₃]⁻, [(CF₃CF₂CF₂)₃PF₃]⁻,
[((CF₃)₂CF)₃PF₃]⁻, [((CF₃)₂CF)₂PF₄]⁻,
[((CF₃)₂CFCF₂)₃PF₃]⁻, and [((CF₃)₂CFCF₂)₂PF₄]⁻.

Alternatively, PAG (B') is a diaryliodonium hexafluoroantimonate. The aryl moiety of the diaryliodonium hexafluoroantimonate is a substituted or unsubstituted aryl group such as phenyl and tolyl, in which some hydrogen atoms may be substituted by a monovalent hydrocarbon group of 5 to 20 carbon atoms such as pentyl, hexyl, isohexyl, heptyl or octyl. As the substituent group, a monovalent hydrocarbon group of 10 to 20 carbon atoms is preferred for solubility in component (A) and curability.

The photoacid generator (B) or (B') may be used in an effective amount for facilitating the cure of organopolysiloxane (A). Typically the amount of PAG is 0.05 to 20 parts, preferably 0.1 to 10 parts by weight per 100 parts by weight of the cation polymerizable organopolysiloxane (A). An appropriate amount may be determined by taking into account many factors including the nature of cation polymerizable organopolysiloxane (A), the type and dose of energy radiation, temperature, humidity, curing time, and coating weight. If the amount of PAG is less than 0.05 pbw on the standard basis, the cation polymerizable compound may polymerize to a short extent. If the amount of PAG exceeds 20 pbw on the standard basis, properties of the cured silicone are degraded due to the presence of unreacted PAG and decomposed products thereof.

The PAG may be previously dissolved in a solvent which does not interfere with cationic polymerization, in order that the PAG be readily dissolved in the organopolysiloxane. Suitable solvents include carbonates such as propylene carbonate, ethylene carbonate, 1,2-butylene carbonate, dimethyl carbonate, and diethyl carbonate; esters such as ethyl acetate, ethyl lactate, β-propiolactone, β -butyrolactone, γ-butyrolactone, δ-valerolactone, and ε -caprolactone; alkyl ethers of ethylene glycol, propylene glycol, diethylene glycol, dipropylene glycol, triethylene glycol, and tripropylene glycol, typically monoalkyl ethers such as monomethyl ether, monoethyl ether, monobutyl ether or dialkyl ethers such as dimethyl ether, diethyl ether, dibutyl ether; and acetic acid esters of the foregoing monoalkyl ethers of glycols. If used, the amount of the solvent is typically 15 to 1,000 parts, preferably 30 to 500 parts by weight per 100 parts by weight of the PAG.

Generally the radiation curable silicone composition is obtained by blending amounts of components (A) and (B) or (B'). In addition to these components, additives may be optionally used. Suitable additives include photosensitizers such as anthracene, naphthalene, ketone, carbazole, chrysene, and phenanthrene compounds, pigments, fillers, antistatic agents, flame retardants, defoamers, rheological modifiers, photostabilizers, solvents, non-reactive resins, and radical polymerizable compounds. Such optional additives may be used in ordinary amounts as long as the advantages of the invention are not impaired.

The silicone composition of the invention may be cured by irradiating actinic energy radiation. Any actinic energy radiation having sufficient energy to induce decomposition of the PAG may be employed. The preferred energy radiation in the ultraviolet to visible range (about 100 to about 800 nm) is available from low, medium, high or extra-high pressure mercury lamps, metal halide lamps, xenon lamps, carbon arc lamps, fluorescent lamps, semiconductor solid laser, argon laser, He-Cd laser, KrF excimer laser, ArF excimer laser, F₂ laser and other light sources. Also high-energy radiation such as electron beam or x-ray is useful. Satisfactory results are obtained when actinic energy radiation is irradiated for 0.1 to 10 seconds at room temperature (25°C). A longer irradiation time may be employed when the transmittance of energy radiation is low, or when a coating of the curable silicone composition is thick. If desired, irradiation of energy radiation may be followed by post-cure, typically heating at room temperature (25°C) to 150°C for several seconds to several hours.

Since the silicone composition can be effectively cured by brief UV irradiation, it finds use as release agent for release paper and release film, coating agent for pressure-sensitive adhesive label release paper, back coating agent for pressure-sensitive adhesive tape, and protective coating agent for metals and plastics.

Examples of the substrate to which the silicone composition can be applied include paper sheets such as glassine paper, kraft paper, clay-coated paper, laminated paper sheets such as polyethylene-laminated wood-free paper and polyethylene-laminated kraft paper, and plastic films of synthetic resins such as polyesters (e.g., PET), polypropylene, polyethylene, polyvinyl chloride, polytetrafluoroethylene, polyimides, and metal foils such as aluminum.

The silicone composition is coated onto a substrate by any well-known coating techniques, for example, roll coating, gravure coating, wire doctor coating, air knife coating, and dipping. The coating weight may be in a range of 0.01 to 100 g/m². The coating readily cures upon exposure to UV radiation. The coated release products are an aspect of the invention.

### EXAMPLE

Examples of the invention are given below by way of illustration and not by way of limitation. The physical properties in Table 1 are measured by the test methods described below. The viscosity is measured at 25°C by a rotational viscometer. In the structural formula, Me stands for methyl, and Ep stands for an epoxy functional group as shown below.

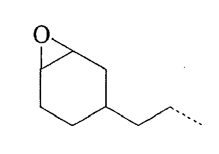

### Solubility

To 100 parts by weight of a cation polymerizable organopolysiloxane was added 1 part by weight of a PAG. The ingredients were uniformly mixed. After the mixture was allowed to stand for one hour, it was visually observed to examine the solubility of the PAG in the organopolysiloxane.

### Evaluation criterion

○: Mixture looked clear, uniform dissolution
Δ : Mixture looked hazy
× : Precipitate in mixture

### Cure

Once a radiation curable silicone composition was prepared, it was coated onto a polyethylene-laminated wood-free paper sheet to a coating weight of about 0.7 g/m² by means of a roll coater. The coating was exposed to UV under two 80 W/cm high-pressure mercury lamps in a dose of 50 mJ/cm², to form a cured coating. The resulting coating was evaluated for cure by visual observation.

### Evaluation criterion

○ : Overall coating has cured
Δ : Overall coating has half cured
× : Overall coating remains uncured

### Peeling force

A cured coating of a silicone composition was evaluated by measuring a peeling force. A silicone composition was coated onto a PET film to a coating weight of about 0.8 g/m². The coating was exposed to UV under two 80 W/cm high-pressure mercury lamps in a dose of 50 mJ/cm², to form a cured coating. A 25-mm wide strip of acrylic pressure-sensitive adhesive tape TESA7475 was attached to the surface of the cured coating and pressed by rolling once back and forth a roller of 2 kg, obtaining a sample for peeling force measurement.

Under a load of 70 gf/cm², the sample was aged at 70° C for 20 to 24 hours. Thereafter, using a tensile tester, the tape strip was pulled at a pull rate of 0.3 m/min at an angle of 180°. The force (N/25 mm) required to peel the strip from the film was measured.

### Substrate adhesion

A silicone composition was coated onto a PET film to a coating weight of about 0.8 g/m². The coating was exposed to UV under two 80 W/cm high-pressure mercury lamps in a dose of 50 mJ/cm², to form a cured coating. The adhesion of the cured coating to the PET substrate was examined by rubbing the coating surface with the finger.

### Evaluation criterion

○ : No cured coating rubs off PET substrate
Δ : Some cured coating rubs off PET substrate × : Cured coating rubs off PET substrate

### Example 1

A silicone composition #1 was prepared by mixing 100 parts by weight of a cation polymerizable organopolysiloxane (a) with 2.0 parts by weight of a 50 wt% toluene solution of 4-(isopropyl)phenyl(p-tolyl)iodonium tris(pentafluoroethyl)-trifluorophosphate (d) until uniform. The organopolysiloxane (a) is represented by the formula below falling within the scope of formula (1), contains epoxy functional organic groups accounting for 4.4 mol% of overall organic groups, and has a viscosity of 770 mPa-s at 25°C. The iodonium salt (d) is a PAG within the scope of the invention.

This silicone composition #1 was examined for solubility, cure, peeling force and substrate adhesion, with the results shown in Table 1.

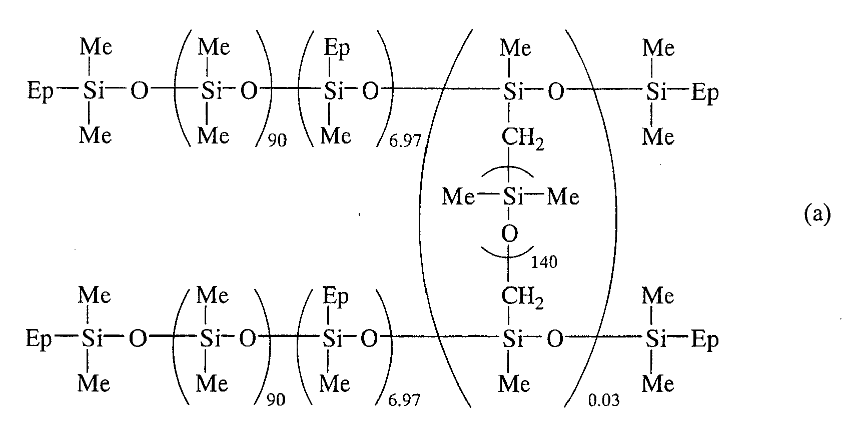

### Example 2

A silicone composition #2 was prepared by mixing 100 parts by weight of organopolysiloxane (a) (as in Example 1) with 1.09 parts by weight of a 92 wt% acetonitrile solution of bis[4-n-(C₁₀-C₁₃)alkylphenyl]iodonium hexafluoroantimonate (e) until uniform. The iodonium salt (e) is a PAG within the scope of the invention.

This silicone composition #2 was examined for solubility, cure, peeling force and substrate adhesion, with the results shown in Table 1.

### Example 3

A silicone composition #3 was prepared by mixing 100 parts by weight of a cation polymerizable organopolysiloxane (b) with 2.0 parts by weight of a 50 wt% toluene solution of 4-(isopropyl)phenyl(p-tolyl)iodonium tris(pentafluoroethyl)-trifluorophosphate (d) until uniform. The organopolysiloxane (b) is represented by the formula below falling within the scope of formula (1), contains epoxy functional organic groups accounting for 4.4 mol% of overall organic groups, and has a viscosity of 650 mPa-s at 25°C. The iodonium salt (d) is a PAG within the scope of the invention.

This silicone composition #3 was examined for solubility, cure, peeling force and substrate adhesion, with the results shown in Table 1.

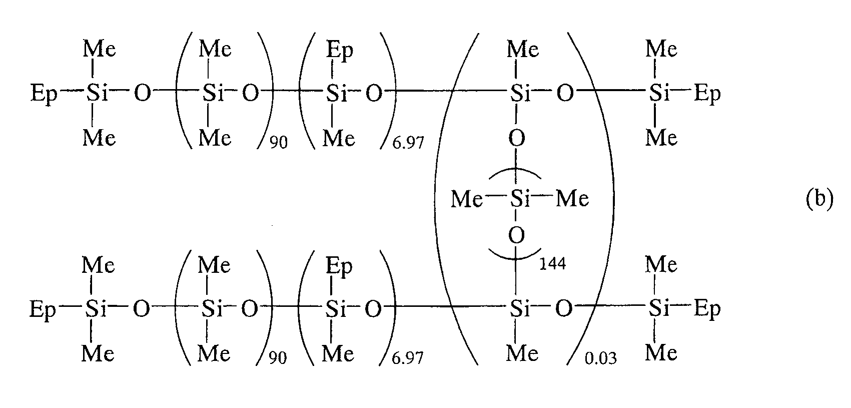

### Example 4

A silicone composition #4 was prepared by mixing 100 parts by weight of cation polymerizable organopolysiloxane (b) (as in Example 3) with 1.09 parts by weight of a 92 wt% acetonitrile solution of bis[4-n-(C₁₀-C₁₃)alkylphenyl]iodonium hexafluoroantimonate (e) as PAG until uniform.

This silicone composition #4 was examined for solubility, cure, peeling force and substrate adhesion, with the results shown in Table 1.

### Comparative Example 1

A silicone composition #5 was prepared by mixing 100 parts by weight of a cation polymerizable organopolysiloxane (c) with 2.0 parts by weight of a 50 wt% toluene solution of 4-(isopropyl)phenyl(p-tolyl)iodonium tris(pentafluoroethyl)-trifluorophosphate (d) until uniform. The organopolysiloxane (c) is represented by the formula below, contains epoxy functional organic groups accounting for 3.7 mol% of overall organic groups, and has a viscosity of 150 mPa-s at 25°C. The iodonium salt (d) is a PAG within the scope of the invention.

This silicone composition #5 was examined for solubility, cure, peeling force and substrate adhesion, with the results shown in Table 1.

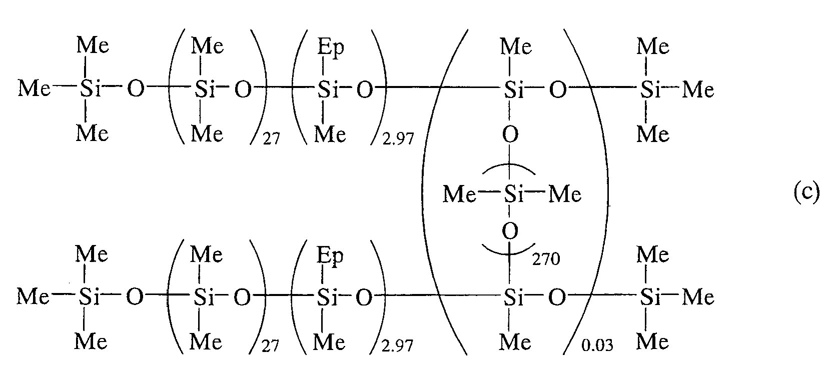

### Comparative Example 2

A silicone composition #6 was prepared by mixing 100 parts by weight of organopolysiloxane (c) (as in Comparative Example 1) with 1.09 parts by weight of a 92 wt% acetonitrile solution of bis[4-n-(C₁₀-C₁₃)alkylphenyl]iodonium hexafluoroantimonate (e) as PAG until uniform.

This silicone composition #6 was examined for solubility, cure, peeling force and substrate adhesion, with the results shown in Table 1.

### Comparative Example 3

A silicone composition #7 was prepared by mixing 100 parts by weight of organopolysiloxane (c) (as in Comparative Example 1) with 2.0 part by weight of a 50 wt% toluene solution of 4-(phenylthio)phenyldiphenylsulfonium tris(pentafluoroethyl)trifluorophosphate (f) as PAG until uniform.

This silicone composition #7 was examined for solubility, cure, peeling force and substrate adhesion, with the results shown in Table 1.

**Table 1**

| | Composition (pbw) | | | | | | Solubility | Cure | Peeling force (g/25 mm) | Substrate adhesion |
|---|---|---|---|---|---|---|---|---|---|---|
| | (A) Cation polymerizable organopolysiloxane | | | (B) PAG *¹ | | | | | | |
| | (a) | (b) | (c) | (d) | (e) | (f) | | | | |
| Example 1 | 100 | | | 1.0 | | | ○ | ○ | 17 | ○ |
| Example 2 | 100 | | | | 1.0 | | ○ | ○ | 18 | ○ |
| Example 3 | | 100 | | 1.0 | | | ○ | ○ | 16 | ○ |
| Example 4 | | 100 | | | 1.0 | | ○ | ○ | 17 | ○ |
| Comparative Example 1 | | | 100 | 1.0 | | | ○ | ○ | 15 | × |
| Comparative Example 2 | | | 100 | | 1.0 | | ○ | ○ | 16 | × |
| Comparative Example 3 | | | 100 | | | 1.0 | Δ | ○ | 17 | × |

| | | | | | | | | | | |
|---|---|---|---|---|---|---|---|---|---|---|
| *1 Solid content (pbw) of PAG Note In respect of numerical ranges disclosed in the present description it will of course be understood that in the normal way the technical criterion for the upper limit is different from the technical criterion for the lower limit, i.e. the upper and lower limits are intrinsically distinct proposals. | | | | | | | | | | |

## Claims

1. A radiation curable silicone composition comprising
(A) 100 parts by weight of cation-polymerisable organopolysiloxane having a siloxane chain terminated with epoxy-containing organic group, represented by the general formula (1) : 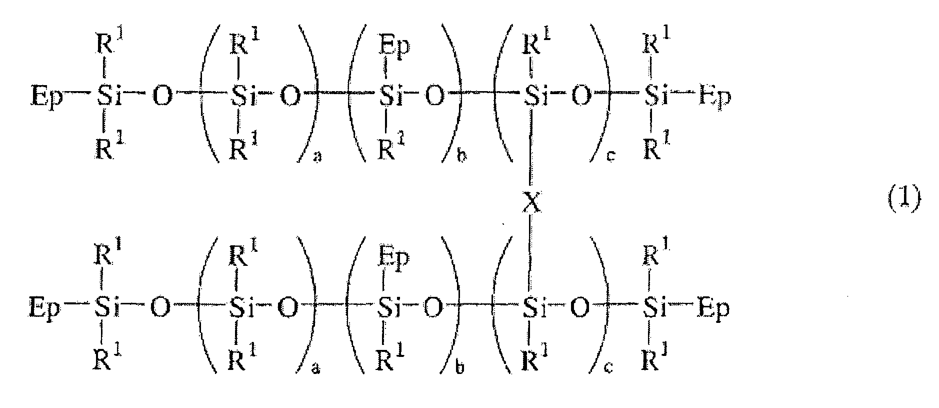 wherein each R¹ independently is a substituted or unsubstituted monovalent hydrocarbon group of 1 to 10 carbon atoms, Ep is epoxy-containing monovalent organic group and X is a group of general formula (2) or (3):
-Y-(Z)ₙ-Y- (2)
-O-(Z)ₙ- (3)
wherein Y is a divalent hydrocarbon group of 1 to 6 carbon atoms, Z is a dimethylsiloxy group, and n is an integer of at least 1;
a, b and c are numbers of at least 0, a+b+c being a number such that the organopolysiloxane has a viscosity of 100 to 1,000 mPa-s at 25°C and the epoxy-containing monovalent organic group accounts for from 1 to 20 mol% of the entire organic groups, and
(B) 0.05 to 20 parts by weight of photoacid generator selected from
(B)(i) fluoroalkyl fluorophosphoric acid salt having the general formula (4): 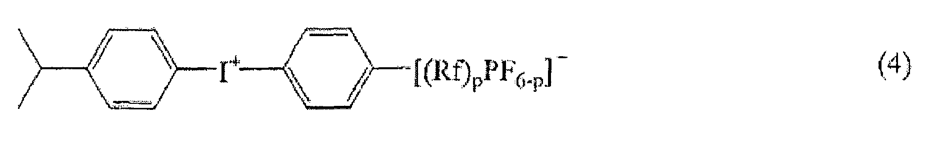 wherein Rf is each independently an alkyl group of 1 to 8 carbon atoms in which at least 80 mol% of hydrogen atoms are substituted by fluorine atoms, and p is an integer of 1 to 5, and
(B) (ii) diaryliodonium hexafluoroantimonate.

2. A composition of claim 1 wherein in formula (1) a is a number from 10 to 150, b is a number from 1 to 15 and c is a number from 0 to 1.

3. A composition according to claim 1 in which in formula (1) a is a number from 10 to 150.

4. A composition according to claim 1 or 3 in which in formula (1) b is a number from 1 to 15.

5. A composition according to claim 1, 3 or 4 in which in formula (1) c is a positive number, from more than 0 up to 1.

6. A composition according to any one of the preceding claims in which in formula (1) 90 to 100 mol% of groups R¹ are alkyl, preferably methyl.

7. A composition according to any one of the preceding claims in which in formulae (2) and (3) for group X, Y is selected from methylene, ethylene, propylene and butylene and n is from 1 to 300.

8. A composition of any one of the preceding claims which is used in release paper.

9. A release paper or release film comprising a paper or film substrate with a release coating which is a composition according to any one of claims 1 to 7 in cured form.

10. Use of a composition according to any one of claims 1 to 7 to form a coating on a substrate by coating the composition onto the substrate and curing by irradiation.

11. Use according to claim 10 in which the substrate is a paper sheet, plastic film or metal foil.

12. Use according to claim 10 or 11 in which the cured coating is a release coating for a pressure-sensitive adhesive.

## Patentansprüche

1. Strahlungshärtbare Siliciumzusammensetzung, die Folgendes umfasst:
(A) 100 Gewichtsteile eines kationisch polymerisierbaren Organopolysiloxans mit einer Siloxankette, die epoxyhältige endständige organische Gruppen aufweist, dargestellt durch die allgemeine Formel (1): 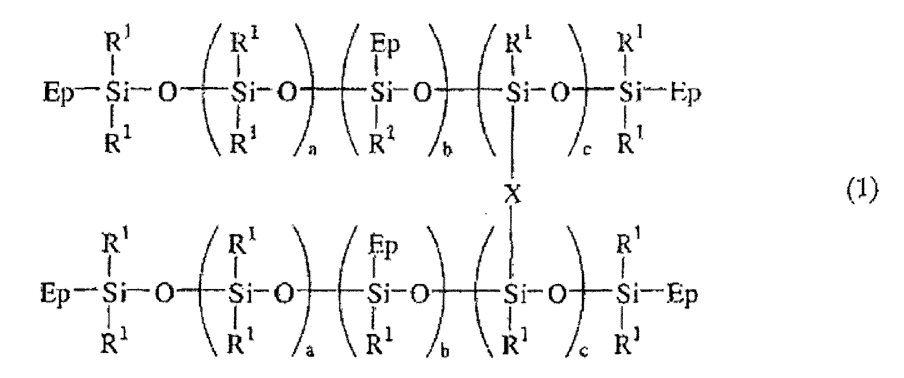 worin die R¹ unabhängig voneinander substituierte oder unsubstituierte einwertige Kohlenwasserstoffgruppen mit 1 bis 10 Kohlenstoffatomen sind, Ep eine epoxyhältige einwertige organische Gruppe ist und X eine Gruppe der allgemeinen Formel (2) oder (3) ist:
-Y-(Z)ₙ-Y- (2)
-O-(Z)ₙ- (3)
worin Y eine zweiwertige Kohlenwasserstoffgruppe mit 1 bis 6 Kohlenstoffatomen ist, Z eine Dimethylsiloxygruppe ist und n eine ganze Zahl von zumindest 1 ist;
a, b und c Zahlen von zumindest 0 sind, a+b+c eine solche Zahl ist, dass das Organopolysiloxan eine Viskosität von 100 bis 1.000 mPa·s bei 25 °C aufweist und die epoxyhältigen einwertigen organischen Gruppen 1 bis 20 Mol-% aller organischen Gruppen ausmachen, und
(B) 0,05 bis 20 Gewichtsteile eines Photosäurebildners, der aus
(B)(i) Fluoralkylfluorophosphorsäure-Salz der allgemeinen Formel (4) 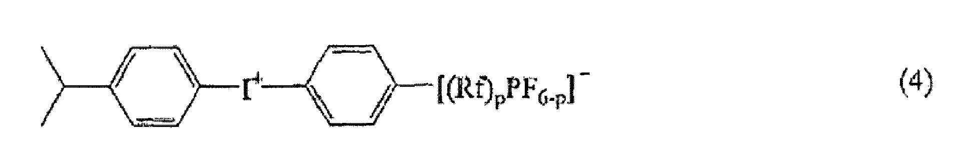 worin die Rf unabhängig voneinander Alkylgruppen mit 1 bis 8 Kohlenstoffatomen sind, wobei zumindest 80 Mol-% der Wasserstoffatome durch Fluoratome substituiert sind, und p eine ganze Zahl von 1 bis 5 ist, und
(B)(ii) Diaryliodoniumhexafluoroantimonat ausgewählt ist.

2. Zusammensetzung nach Anspruch 1, wobei in Formel (1) a eine Zahl von 10 bis 150 ist, b eine Zahl von 1 bis 15 ist und c eine Zahl von 0 bis 1 ist.

3. Zusammensetzung nach Anspruch 1, wobei in Formel (1) a eine Zahl von 10 bis 150 ist.

4. Zusammensetzung nach Anspruch 1 oder 3, wobei in Formel (1) b eine Zahl von 1 bis 15 ist.

5. Zusammensetzung nach Anspruch 1, 3 oder 4, wobei in Formel (1) c eine positive Zahl von mehr als 0 bis 1 ist.

6. Zusammensetzung nach einem der vorangegangenen Ansprüche, wobei in Formel (1) 90 bis 100 Mol-% der Gruppen R¹ Alkyl, vorzugsweise Methyl, sind.

7. Zusammensetzung nach einem der vorangegangenen Ansprüche, wobei für die Gruppe X in Formel (2) und (3) Y aus Methylen, Ethylen, Propylen und Butylen ausgewählt ist und n = 1 bis 300 ist.

8. Zusammensetzung nach einem der vorangegangenen Ansprüche, die in Trennpapier verwendet wird.

9. Trennpapier oder Trennfilm, die ein Papier- oder Filmsubstrat mit einer Trennbeschichtung umfassen, bei der es sich um eine Zusammensetzung nach einem der Ansprüche 1 bis 7 in gehärteter Form handelt.

10. Verwendung einer Zusammensetzung nach einem der Ansprüche 1 bis 7 zur Ausbildung einer Beschichtung auf einem Substrat durch Auftragen der Zusammensetzung auf das Substrat und Härten durch Bestrahlen.

11. Verwendung nach Anspruch 10, wobei das Substrat ein Papierbogen, eine Kunststofffolie oder eine Metallfolie ist.

12. Verwendung nach Anspruch 10 oder 11, wobei die gehärtete Beschichtung eine Trennbeschichtung für einen druckempfindlichen Klebstoff ist.

## Revendications

1. Composition de silicone durcissable par irradiation comprenant
(A) 100 parties en poids d'un organopolysiloxane polymérisable par polymérisation cationique ayant une chaîne siloxane terminée par un groupe organique contenant un fragment époxy, représenté par la formule générale (1) : 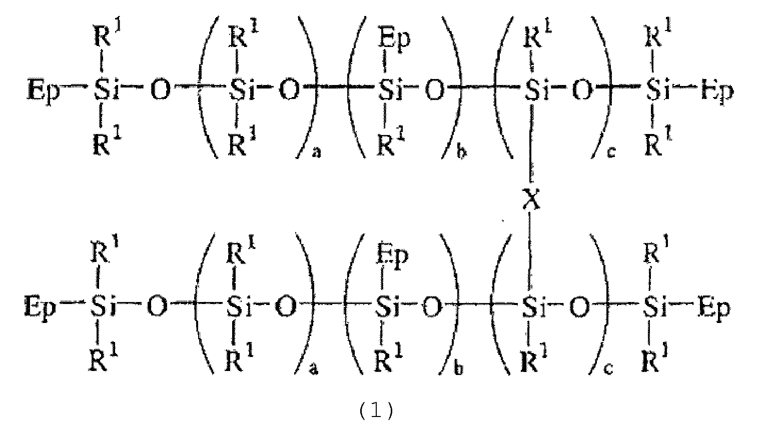 dans laquelle chaque R¹ est indépendamment un groupe hydrocarboné monovalent substitué ou non substitué ayant 1 à 10 atomes de carbone, Ep est un groupe organique monovalent contenant un fragment époxy et X est un groupe de formule générale (2) ou (3) :
-Y-(Z)ₙ-Y- (2)
-O-(Z)ₙ- (3)
où Y est un groupe hydrocarboné divalent ayant 1 à 6 atomes de carbone, Z est un groupe diméthylsiloxy, et n est un entier valant au moins 1 ;
a, b et c sont des nombres valant au moins 0, a+b+c étant un nombre tel que l'organopolysiloxane ait une viscosité de 100 à 1000 mPa.s à 25°C et le groupe organique monovalent contenant un fragment époxy représente de 1 à 20 % en moles de tous les groupes organiques, et
(B) 0,05 à 20 parties en poids d'un générateur de photoacide choisi parmi
(B)(i) un sel d'acide fluoroalkyl-fluorophosphorique de formule générale (4) : 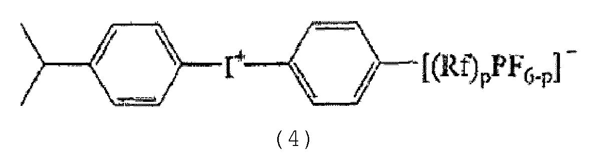 dans laquelle chaque Rf est indépendamment un groupe alkyle de 1 à 8 atomes de carbone dont au moins 80 % des atomes d'hydrogène sont remplacés par des atomes de fluor, et p est un entier de 1 à 5, et
(B)(ii) l'hexafluoroantimonate de diaryl-iodonium.

2. Composition selon la revendication 1, dans laquelle, dans la formule (1), a est un nombre de 10 à 150, b est un nombre de 1 à 15 et c est un nombre de 0 à 1.

3. Composition selon la revendication 1, dans laquelle, dans la formule (1), a est un nombre de 10 à 150.

4. Composition selon la revendication 1 ou 3, dans laquelle, dans la formule (1), b est un nombre de 1 à 15.

5. Composition selon la revendication 1, 3 ou 4, dans laquelle, dans la formule (1), c est un nombre positif, allant de plus de 0 jusqu'à 1.

6. Composition selon l'une quelconque des revendications précédentes, dans laquelle, dans la formule (1), 90 à 100 % en moles des groupes R¹ sont des groupes alkyle, de préférence méthyle.

7. Composition selon l'une quelconque des revendications précédentes, dans laquelle, dans les formules (2) et (3) pour le groupe X, Y est choisi parmi le méthylène, l'éthylène, le propylène et le butylène, et n vaut de 1 à 300.

8. Composition selon l'une quelconque des revendications précédentes, qui est utilisée dans un papier antiadhésif.

9. Papier antiadhésif ou film antiadhésif comprenant un substrat en papier ou en film avec un revêtement antiadhésif qui est une composition selon l'une quelconque des revendications 1 à 7 sous forme durcie.

10. Utilisation d'une composition selon l'une quelconque des revendications 1 à 7 pour former un revêtement sur un substrat par déposition de la composition sous forme de revêtement sur le substrat et durcissement par irradiation.

11. Utilisation selon la revendication 10, dans laquelle le substrat est une feuille de papier, un film plastique ou une feuille métallique.

12. Utilisation selon la revendication 10 ou 11, dans laquelle le revêtement durci est un revêtement antiadhésif pour un adhésif sensible à la pression.
